# EUROPEAN PATENT SPECIFICATION

(11) **EP 1 735 984 B1**
(45) Date of publication and mention of the grant of the patent: **15.01.2014**
(21) Application number: 04728090.4
(22) Date of filing: 16.04.2004
(51) Int. Cl.: H04L 29/06, H04L 29/08

(54) **METHOD AND APPARATUS FOR HANDLING USER'S ATTRIBUTES SHARING BETWEEN SERVICE PROVIDERS**
VERFAHREN UND VORRICHTUNG ZUR VERWALTUNG VON GETEILTEN GEBRAUCHERMERKMALEN ZWISCHEN DIENSTANBIETERN
PROCEDE ET APPAREIL DE TRAITEMENT DU PARTAGE D'ATTRIBUTS D'UTILISATEURS ENTRE PRESTATAIRES DE SERVICES

(43) Date of publication of application: 27.12.2006
(73) Proprietor: Telefonaktiebolaget LM Ericsson (publ), 164 83 Stockholm (SE)
(72) Inventor: LAGUNA-MACIAS, Ruben, E-28912 Leganes Madrid (ES); MONJAS-LLORENTE, Miguel-Angel, E-28045 Madrid (ES)
(74) Representative: Egrelius, Fredrik
(86) International application number: PCT/SE2004/000594
(87) International publication number: WO 2005/101791

(56) References cited:
- WO-A-2004/004273
- US-A1- 2003 182 421

## Description

### FIELD OF THE INVENTION

The present invention generally relates to user's attributes sharing among a plurality of service providers. More particularly, the invention is pertaining to methods and apparatus for handling of a user's attributes sharing between an attribute provider and an attribute requestor through discovery service mechanisms.

### BACKGROUND

The Internet is a growing network wherein services are provided by different organisations generally known as service providers. The most widely spread services in the Internet community are those generally referred to as web services whereby users can communicate with each other on personal basis, make business, carry out proceedings with governmental organizations, and many other active or passive activities that a user might carry out.

An important key to the success of these web services is the user's Identity and, more precisely, the security, authenticity, and privacy of a user accessing and operating a web service. In a quite simple and exemplary scenario involving e-commerce, a user might want to apply quite traditional shopping habits while merely using his personal computer at home to make use of different and available web services for shopping. Thus, the user would ask different suppliers in order to get different budgets for a product, the user would assess different business conditions to make a choice, and would eventually give personal details and a valid charging reference for buying the product. A valid charging reference might be in this context a credit card identity or a valuable assertion issued by a trustable organization such as a bank accepting the charging. With this exemplary scenario the above issues of user's security, authenticity and privacy, as well as some others to be further commented, may be reasonably introduced. On the one hand, the supplier user and likely the trustable organization want to ensure that the buying user is the one who claims, the buying user wants to have the highest level of security in order to prevent a fraudulent use of his credit card or bank reference accepting any charge, and both the supplier and the buying users want to keep their privacy to avoid other supplier and buying users to know the business conditions they might have mutually agreed on, for example.

The authentication of a user has been traditionally solved by the user providing an identity and a password to be authenticated by a service provider where the user has an account. Generally speaking, a user might likely have a different identity and password per service provider where the user accesses or where the user has accounts. The procedure to follow when several authentications have to be carried out for a user is unpleasant, tedious and likely unnecessary in some scenarios, especially from the user perspective. A first attempt to solve this drawback, thus making more attractive and dynamic the use of web services through service providers, is the introduction of the so-called Single Sign-On (SSO) services for a user. The current SSO principle states that users are authenticated just once with an Identity Provider (IdP) and are given access to all their subscribed services accessible through a number of service providers (SP) that accept such level of authentication or, in other words, a number of service providers (SP) that along with the Identity Provider (IdP) form a circle of trust. For the purpose of the present invention, a circle of trust is a sort of agreement signed by a plurality of service providers and at least one Identity Provider whereby the formers firstly accept credentials from a user as a proof of having had a single sign-on authentication with the latter, and secondly offer a requested service to the user.

with this first attempt, a single sign-on (SSO) authentication of a user can be carried out within a circle of trust where a plurality of service providers (SP) and identity providers (IdP) are included, and wherein each service provider may provide web services to the user, on its own, or in co-operation with other service providers. As accessing a web service the user may be asked to provide a certain number of user's attributes, such as personal details, that the service providers might need for better customizing the service, or for further keeping a user's profile, or for other reasons.

On the other hand, an extreme privacy and security might preclude the user from getting closer to, and from achieving, other business opportunities. In the above example of e-commerce, a user might want to broadcast a certain shopping profile to a number of service providers where interesting products for the client are available in order to obtain different shopping conditions. In this scenario, when discussing said first attempt of supporting single sign-on authentication within a circle of trust, there might be user's attributes continuously asked to the user from several service providers, and this might be also unpleasant, tedious and likely unnecessary from the user perspective. A second attempt to improve the use of web services might be the sharing of user's attributes between services providers in a circle of trust and inasmuch as security and privacy are not seriously compromised.

At this stage some considerations have to be made in respect of currently existing art as well as standards in this field, and more specifically, in terms of what different fora accept to compromise on privacy and security and how to balance them with the development of emerging and sophisticated web services.

Liberty Alliance Project (hereinafter LAP) aims to develop a set of open technical specifications for web services. A first achievement of LAP was the Identity Federation Framework (Id-FF) enabling single sign-on using a federated network identity. The Id-FF according to LAP provides specifications for associating, connecting, and binding multiple accounts for a given Principal at various Liberty Alliance sites within a Circle of Trust. This Circle of Trust being regarded as the basis for building up a more material relationship of members in a Federation.

That is, the first attempt described above of supporting single sign-on in a circle of trust is a simplified view of the Liberty achievement, wherein a service provider (SP) may be regarded as a Liberty Alliance site; a user with the user's Identity may be regarded as a Principal having a federated network identity that can be authenticated by the Identity Provider (IdP), the Principal being likely regarded as a unique user or as a group of individuals.

LAP has also go further with the above second attempt to improve the use of web services by proposing, apart from the Id-FF, a so-called Identity Web Services Framework (Id-WSF) specifying the basis for privacy and security protection and, more specifically, LAP promotes and defines the Id-WSF for a permission-based attributes sharing. In this respect, LAP distinguishes two classes of policies for carrying out said permission-based attributes sharing: policies established by the LAP processing components, namely component entities within the circle of trust, and policies established by individual Principals, namely the users. In short, LAP supports the above second attempt of sharing user's attributes within the circle of trust inasmuch as the user so permits.

Prior to discussing other existing techniques or trends to improve the use of web services by sharing users' attributes, the concept and scope of such users' attributes for LAP has to be clarified. On the one hand, an Attribute is understood under LAP as a distinct characteristic of a Principal, thus Principal's characteristics are said to describe the Principal. This definition of attribute made by Liberty harmonizes with the aim of a user's attribute as recited throughout this document, as well as with general interpretations made by the public, such as an attribute being a quality regarded as a natural or typical part of somebody or something, and also an attribute being an object recognized as a symbol of a person or his position.

On the other hand, LAP goes beyond the attribute scope and introduces the concept of 'Resource' as either data related to some identity, or service acting on behalf of some identity; the former being a user's attribute in its most classical meaning, such as the user's postal address for example; the latter being a sort of abstraction derived from currently emerging services and facilities that may also characterize a user in interaction with other users, such as a user's calendar where user's appointments may interact with corresponding other-user's appointments. In particular, a user's calendar might be regarded as an exemplary user's attribute interesting to share with other users, for example, simply for appointment purposes, or for more sophisticated services such as the user booking at any time for dinner in a restaurant, and the restaurant making an appointment in the user's calendar as a confirmation of the booking later on.

LAP has introduced the concept of Resource to include both, the former and the latter, whereas the term user's attribute is preferred and maintained throughout the present document for the sake of simplicity. The user's attributes in the present document assume the distinction made by LAP and thus include a sort of identity-related attributes and a sort of service-related attributes for a particular user. Nevertheless, and whenever necessary, both natures may be explicitly distinguished to focus on any particular aspects they might have.

Another interesting scenario appears where big players in the telecommunication market have several types of access and core network technologies distributed along the countries were they operate for providing the users with access to telecom networks and to Internet. In this scenario, the OSA/PARLAY standardization group is working on the development of an open standard interface between the core network and the service network. Therefore, a conventional architecture based on OSA/PARLAY comprises Applications that are formally included in a service network and deployed on Application Servers (AS), a number of Service Capability Features (SCF) representing interface classes of the OSA/PARLAY interface and implemented in Service Capability Servers (SCS), an OSA/PARLAY Framework (OSA-FW) for providing framework capabilities to applications such as a controlled access to the Service Capability Features, and core network elements.

The Service Capability Features (SCF) in OSA/PARLAY may be regarded as a sort of service-related attributes for a particular user, accessed from different Application Servers that may be regarded as Service Providers, and the Service Capability Features (SCF) thus being considered user's attributes that can be shared between service providers within the scope of the present invention.

OSA/PARLAY introduces a so-called Framework, which is aware of a Service level Agreement (SLA) signed between the network operator and the service providers, and this OSA/PARLAY Framework grants or denies access to service capability features on an SLA basis. That is, a given service provider is allowed to access a given number of service capability servers with certain constraints, however, the permission to access a service capability feature for a user, namely the permission to share a user's attribute, is not tied to the user, but simply to the Service level Agreement (SLA) signed between the operator and the service provider.

Currently existing techniques under LAP Id-WSF provides for a Discovery Service where each service provider, which hosts user's attributes, registers a sort of reference to the attributes, namely a so-called resource offering, and from where other service providers fetch such resource offering for further accessing the attribute. Given the required level of privacy and security under LAP, the registration of a resource offering for a user's attribute in said Discovery Service can only be carried out by a service provider upon explicit user's consent. In particular, LAP designates the service provider carrying out the registration of a resource offering as 'attribute provider' whereas any service provider fetching such resource offering is designated as 'attribute requestor'.

Apart from the explicit user's consent to share its user's attributes, the mechanism followed to register a user's attribute for sharing under LAP Id-WSF is not far from the one followed by OSA/PARLAY, but for the fact that the registration of a resource offering in LAP is on a per user basis, whereas the registration of a service capability feature handled by a given service capability server is not done on per user basis but rather on per service capability feature, that is, on a per attribute identifier basis.

In this respect, an object of the present invention is the provision of a mechanism whereby the sharing of user's attributes can be carried out independently of requiring a user's consent that may be mandatory under certain scenarios and superfluous under others, whilst still compatible with the requirement of users' consents.

On the other hand, the use of a Discovery Service as explained above for LAP, as well as the OSA/PARLAY Framework, may work in an acceptable manner for static user's attributes, or attributes that change very seldom. For instance, an exemplary static user's attribute may be a Service-related attribute where a service provider customizes its behaviour towards the user based on the user's online calendar, which in particular might be available through another service provider. In case the service provider wants to send goods to the user, this service provider can query the user's online calendar to determine the best delivery date for the user, based on his current appointments. This service is supposed to be always available at the same node or, at least, is supposed to change quite seldom. Still another exemplary static user's attributes might be an Identity-related attribute where a service provider may customize its appearance and behaviour towards the user based on identity related attributes like a preferred language. In this way, the service provider may ask another service provider through the Discovery Service for the preferred language and may further communicate with the user using this language. This service is likely always available at the same node as well.

However, none of the currently existing techniques work properly for dynamic attributes that change very often. These dynamic user's attributes might be data generated during a user's service session, which may even change during the session, or other data belonging to the master session for the user, this master session being open once the user has been authenticated and comprising access session data and service session data among others. For instance, an exemplary dynamic user's attribute may be a Service-related attribute where a service provider may customize its appearance and behavior towards a user based on user's roaming status or on access capabilities. In this way, the service provider may ask another service provider, which owns the attribute for the user's roaming status or access capabilities through the Discovery Service, and provide the user with different commercial offers depending on where the user is roaming, such as car rental information when the user is abroad. Also, the service provider contents can be customized for the user access capabilities only showing multimedia rich contents if the user is connected through a broadband connection. This kind of attributes may be available at different nodes, or at different network locations from a session to another, or may even change during a user session.

In principle, a user's attribute registered in a LAP Discovery Service or in an OSA/PARLAY Framework should be deregistered and registered again as the attribute changes, and always with user's consent under LAP, or other permission-based policies to apply under OSA/PARLAY. These continuous registrations of users' attributes imply in most of the cases the application of permission-based policies that might make no sense since there have been no new condition to modify the previous policies applied. In fact, a user's attribute may be deregistered and registered again only due to a temporary limitation on broadband connection, for example, and this should not be appreciated as a substantial change deserving application of permission-based policies again.

Thereby, an object of the present invention is the provision of a mechanism for sharing user's attributes whereby there is no need for carrying out continuous procedures for deregistering and registering a user's attribute that changes very often.

Moreover, the fact that a service provider hosting a user's attribute, namely an attribute provider (AP), registers such user's attribute in a sort of Discovery Service does not necessarily imply that said user's attribute is going to be shared from another service provider, namely from an attribute requestor (AR). Under this assumption, and especially for users' attributes changing very often, deregistering and registering such users' attributes create an extremely high registration traffic towards the Discovery Service and quite unnecessary processing load without any actual sharing of the user's attribute.

Thereby, another object of the present invention is an enhancement of the existing mechanisms for sharing of users' attributes so that the registration traffic towards a Discovery Service, or the like, is optimized for an actual sharing of such user's attribute.

US2003182421 discloses a method for distributing identities and reputations among network nodes, wherein each of the nodes stores reputation information for one or more other nodes and a first node may iteratively increase confidence in a second node by receiving one or more responses to a request for reputation information for the second node to the other nodes

### SUMMARY OF THE INVENTION

The objects above, among other things, are accomplished in accordance with the invention by the provision of means and methods for handling user's attributes sharing between Service Providers.

Thus, there is provided a method of handling user's attributes sharing between a plurality of Service Providers, a Service Provider being regarded as an Attribute Provider hosting at least one user's attribute for a user and offering such attribute for sharing with other Service Providers regarded as Attribute Requestors, an attribute offering being published in a Discovery Service Framework suitable for holding attribute offerings from at least one Attribute Provider and for providing any of such attribute offerings to at least one Attribute Requestor, the method originally comprising the steps of:
(a) the Attribute Provider registering an attribute offering in the Discovery Service Framework;
(b) the Attribute Provider providing the attribute upon request from an Attribute Requestor;
   and wherein, in accordance with an aspect of the present invention, the above step a) is preceded in this method by previous steps of:
(c) the Attribute Provider registering an offering registration trigger in the Discovery Service Framework intended to request, if needed, the registration of the attribute offering; and
(d) the Attribute Provider receiving from the Discovery Service Framework a request for registration of the attribute offering.

Given that an offering registration trigger includes a minimum set of indications to request the registration of an attribute offering, an alternative embodiment of this method is proposed wherein the offering registration trigger may be the same for all those users for which the Attribute Provider hosts users' attributes, whereas in another embodiment the offering registration trigger may be different for each user having a user's attribute hosted in an Attribute Provider.

Moreover, the step in this method of registering the offering registration trigger in the Discovery Service Framework may preferably include a step of registering policies intended to govern the lifetime of the offering registration trigger and, in a similar manner, the step of registering an attribute offering in the Discovery Service Framework may also include a step of registering policies intended to govern the lifetime of the attribute offering.

Depending on particular requirements on user's privacy and security in an applicable scenario, this method may comprise a step of obtaining a user's consent to share user's attributes.

Furthermore, in accordance with an embodiment of the invention, the offering registration trigger is preferably withdrawn once the user signs off whereas, in accordance with another alternative embodiment, just the attribute offering, and not the offering registration trigger, is withdrawn once the user signs off.

For the sake of completeness, there is provided a method of publishing through a Discovery Service Framework an attribute offering for sharing a user's attribute between a plurality of Service Providers, a Service Provider being regarded as an Attribute Provider hosting at least the user's attribute for which the attribute offering may be published, this Discovery Service Framework suitable for holding attribute offerings from at least one Attribute Provider, the method originally comprising the steps of:
(a) registering in the Discovery Service Framework an attribute offering upon request from an Attribute Provider;
(b) the Discovery Service Framework providing the attribute offering upon request from a Service Provider acting as an Attribute Requestor for the attribute offering;
   and wherein, in accordance with a second aspect of the present invention, the above step a) is preceded in this method by previous steps of:
(c) registering an offering registration trigger in the Discovery Service Framework upon request from the Attribute Provider;
(d) the Discovery Service Framework processing the offering registration trigger upon request for an attribute offering received from an Attribute Requestor; and
(e) requesting the registration of the attribute offering to the Attribute Provider as a result of processing the offering registration trigger.

Also in this method, and in coordination with a corresponding step in the previous method of handling user's attributes sharing, the step of registering the offering registration trigger in the Discovery Service Framework may preferably include a step of registering policies intended to govern the lifetime of the offering registration trigger and, in a similar manner, the step of registering an attribute offering in the Discovery Service Framework may also include a step of registering policies intended to govern the lifetime of the attribute offering.

In particular, and in accordance with an embodiment of the invention, the offering registration trigger may be withdrawn upon processing corresponding policies governing its lifetime whereas, in accordance with another embodiment of the invention, just the attribute offering, and not the offering registration trigger, is withdrawn upon processing corresponding policies governing its lifetime.

Still further, in accordance with an embodiment of the invention, the offering registration trigger is preferably withdrawn upon request from the Attribute Provider where the user signs off whereas, in accordance with another alternative embodiment, just the attribute offering, and not the offering registration trigger, is withdrawn upon request from the Attribute Provider where the user signs off.

Apart from the above methods, and in accordance with a third aspect of the invention, there is provided a Discovery Service Framework suitable for holding an attribute offering registered from an Attribute Provider and for providing the attribute offering to an Attribute Requestor, the Attribute Provider and the Attribute Requestor being Service Providers enabled for sharing a user's attribute, the Attribute Provider hosting at least the user's attribute to be shared, the Discovery Service Framework generally comprising:
(a) a first input unit for processing an attribute offering received from an Attribute Provider;
(b) a storage for storing contents obtainable from the attribute offering;
(c) a second input unit for processing a request received from an Attribute Requestor for an attribute offering; and
(d) a first output unit for providing the attribute offering to the Attribute Requestor;
   and, in accordance with this third aspect, also comprising:
(e) a third input unit for processing an offering registration trigger received from the Attribute Provider;
(f) a trigger handler for storing contents obtainable from the offering registration trigger and for determining trigger conditions to request a registration of the attribute offering; and
(g) a second output unit for requesting the registration of the attribute offering to the Attribute Provider.

This trigger handler is a component that may be used for determining the trigger conditions for requesting the registration of the attribute offering upon reception in the second input unit of a request for the attribute offering from the Attribute Requestor. Nevertheless, the second input unit might be adapted to this end as well.

The trigger handler might also be usable for processing policies received in the third input unit, policies that are intended to govern the lifetime of the offering registration trigger, though the third input unit itself might also be arranged for processing these policies as well. In this respect, other alternative embodiments, such as receiving policies in the first input unit, might be also advantageously carried out in order to reduce the number of internal components.

Provided that the trigger handler component is present, it may further withdraw an offering registration trigger either upon processing corresponding policies governing its lifetime, or upon request received in a fourth input unit from the Attribute Provider where the user signs off. Moreover, the trigger handler may also withdraw an attribute offering either upon processing corresponding policies governing its lifetime, or upon request received in a fifth input unit from the Attribute Provider where the user signs off.

The Discovery Service Framework is complemented for achieving the objects of the present invention with an Attribute Provider arranged to this end. This Attribute Provider hosting a user's attribute for a user and offering such attribute for sharing with other Service Providers regarded as Attribute Requestors, an attribute offering for the user's attribute being published in a Discovery Service Framework suitable for holding attribute offerings from Attribute Providers and for providing any of such attribute offerings to Attribute Requestors. The Attribute Provider generally comprising:
(a) a first output unit for accessing the Discovery Service Framework to register an attribute offering;
(b) a first input unit for processing a request received from an Attribute Requestor for the attribute offering; and
(c) a second output unit for providing the attribute offering to the Attribute Requestor;
   and, in accordance with a fourth aspect of the present invention, further including:
(d) a third output unit for accessing the Discovery Service Framework to register an offering registration trigger; and
(e) a second input unit for processing a request received from the Discovery Service Framework for registration of the attribute offering.

Preferably in this Attribute Provider, the third output unit may be used for accessing the Discovery Service Framework to register policies intended to govern the lifetime of the offering registration trigger, whereas the first output unit may be used for accessing the Discovery Service Framework to register policies intended to govern the lifetime of the attribute offering. In this respect, other arrangements may be provided where a unique unit may deal with policies related to both offering registration trigger, and attribute offering; or where a combination of a number of units deals with such policies.

As for a method commented above, and depending on particular requirements on the user's privacy and security, this Attribute Provider may further comprise:
(f) a fourth output unit for requesting a user's consent to share a user's attribute; and
(g) a third input unit for obtaining the user's consent to share a user's attribute.

For the sake of coherence with an above method, the third output unit may be used in an embodiment of the invention to register in the Discovery Service Framework a same offering registration trigger for all those users for which the Attribute Provider hosts users' attributes, or may be used in an alternative embodiment to register a different offering registration trigger for each user having a user's attribute hosted in the Attribute Provider.

The Attribute Provider may advantageously include a fifth output unit for accessing the Discovery Service Framework to withdraw an offering registration trigger upon the user signing off, and a sixth output unit for accessing the Discovery Service Framework to withdraw an attribute offering upon the user signing off. However, other arrangements with re-use of other units, or combinations thereof, might be used as well.

In this respect, another advantageous embodiment may be the use of first and third output units, or a combination thereof, to register the offering registration trigger along with the actual attribute offering.

### BRIEF DESCRIPTION OF DRAWINGS

The features, objects and advantages of the invention will become apparent by reading this description in conjunction with the accompanying drawings, in which:
**FIG. 1** represents exemplary components in a prior art architecture for sharing user's attributes between an Attribute Provider and an Attribute Requestor with a Discovery Service Framework for publishing corresponding attribute offerings.
**FIG. 2** shows a simplified sequence diagram representing the process followed in a prior art solution to share a user's attribute between an Attribute Provider and an Attribute Requestor by publishing a corresponding attribute offering in a Discovery Service Framework.
**FIG. 3** represents an exemplary architecture with suitable components for sharing dynamic and static user's attributes between an Attribute Provider and an Attribute Requestor with a Discovery Service Framework for handling offering registration triggers corresponding to attribute offerings.
**FIG. 4** shows a basic sequence diagram representing the process followed in accordance with the invention to share a user's attribute between an Attribute Provider and an Attribute Requestor by handling an offering registration triggers corresponding to said user's attribute and by publishing a corresponding attribute offering in a Discovery Service Framework.

### DETAILED DESCRIPTION OF PREFERRED EMBODIMENTS

The following describes currently preferred embodiments of means and methods for handling user's attributes sharing between service providers.

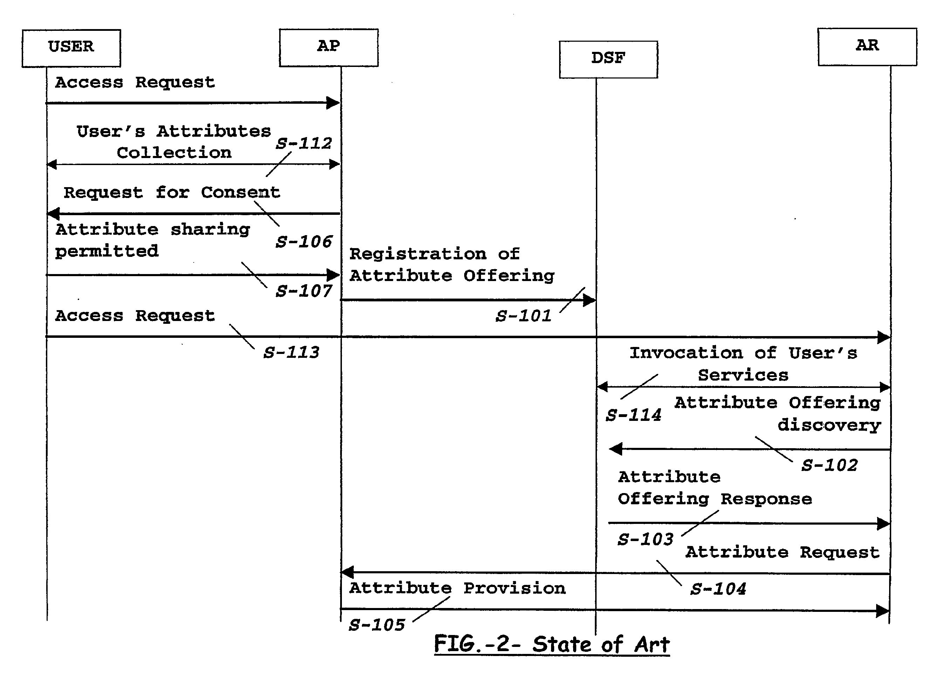

From a user's point of view, the procedure followed to register a user's attribute in a particular service provider is not affected by the present invention. Thus, once the user (40) has been authenticated in the service provider (20), which for the purpose of the present invention plays the role of an Attribute Provider (AP), the service provider collects (S-112), as shown in Fig. 2, a number of user's attributes, if not already done in a previous access from the user. At this stage, and provided that particular user privacy policies have to be taken into consideration, the user may indicate (S-106, S-107) a user's consent to share any particular user's attribute hosted by that service provider (20).

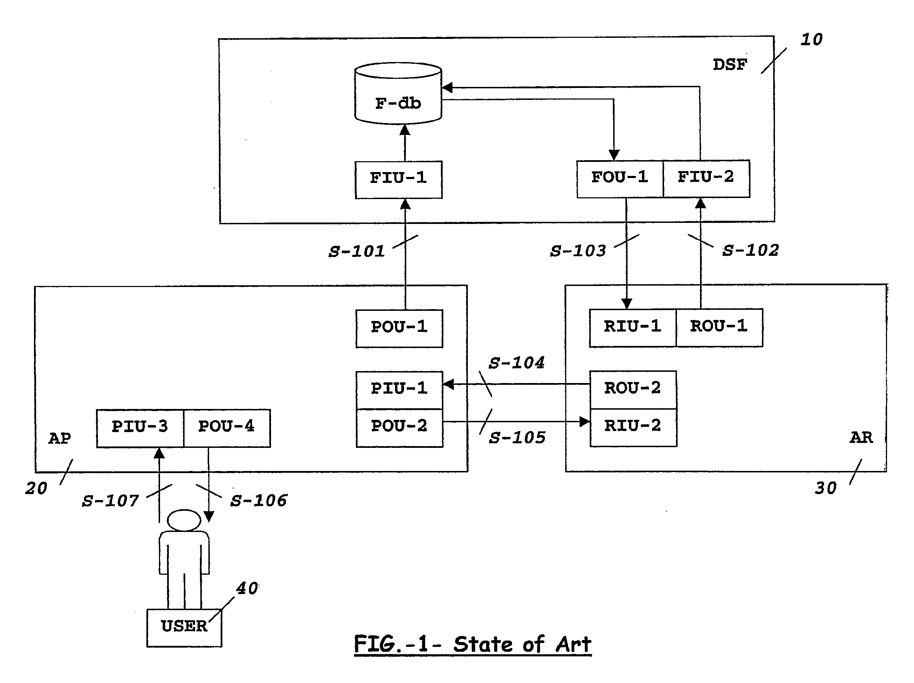

In a solution as illustrated in Fig. 2, the service provider (20) hosting the user's attribute, namely the Attribute Provider, accesses a Discovery Service Framework (10), which is hereinafter referred to as DSF, for registering an attribute offering (S-101) for such user's attribute to be offered. The DSF stores data extracted from this attribute offering in a local storage (F-db) and makes it public and accessible for other service providers (30) wanting to share such user's attribute. To this end, as illustrated in Fig. 1, the Attribute Provider (20) is provided with its first output unit (POU-1) for accessing the DSF (10) to register the attribute offering (S-101), and the DSF is provided with its first input unit (FIU-1) to receive registrations of attribute offerings (S-101).

At a later stage, the user (40) might have accessed another service provider (30) and, after having been authenticated in this another service provider, the user may invoke a service that, for its complete execution, needs a user's attribute that is hosted in an external Attribute Provider (20). The another service provider (30) where the user has presently accessed, playing the role of an Attribute Requestor, requests (S-102) the location of the user's attribute to the DSF (10). This request may be carried out by a 'DS Lookup Query' operation. Upon receipt of such request, the DSF fetches relevant information about an attribute offering for such user's attribute in its local storage (F-db), and sends it back (S-103) to the Attribute Requestor (30). To this end, as illustrated in Fig. 1, the Attribute Requestor (30) is provided with its first output unit (ROU-1) for accessing the DSF (10) to query (S-102) about the user's attribute and its first input unit (RIU-1) for receiving (S-103) the expected response, whereas the DSF (10) is provided with its second input unit (FIU-2) for receiving such query (S-102) and its first output unit (FOU-1) for sending the response (S-103).

Eventually, the Attribute Requestor (30) makes use of the relevant location data obtained from the attribute offering held in the DSF for accessing (S-104) to the Attribute Provider (20) to request the user's attribute hosted in said Attribute Provider (20) and to be presently shared (S-105) with this Attribute Requestor (30). As shown in Fig. 1, the Attribute Requestor is provided with its second output unit (ROU-2) for accessing the Attribute Provider (S-104) and with its second input unit (RIU-2) for receiving the requested user's attribute (S-105), whereas the Attribute Provider (20) includes a first input unit

(PIU-1) for receiving requests (S-104) to share a user's attribute from an Attribute Requestor (30) and a second output unit (POU-2) for sharing (S-105) a requested user's attribute.

In accordance with the invention this process and corresponding means are enhanced to accomplish the objects of the invention.

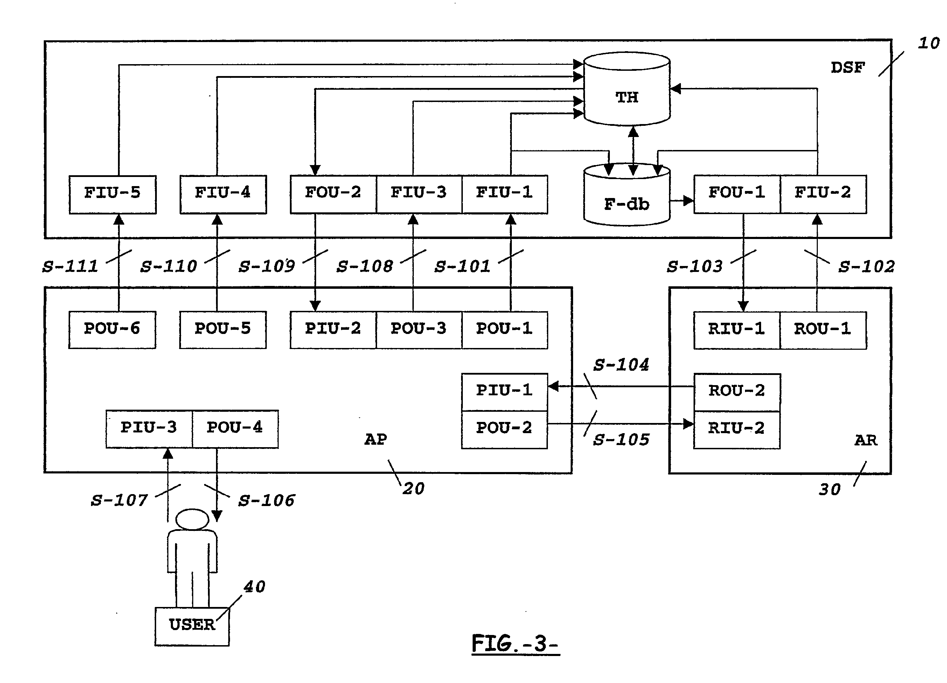

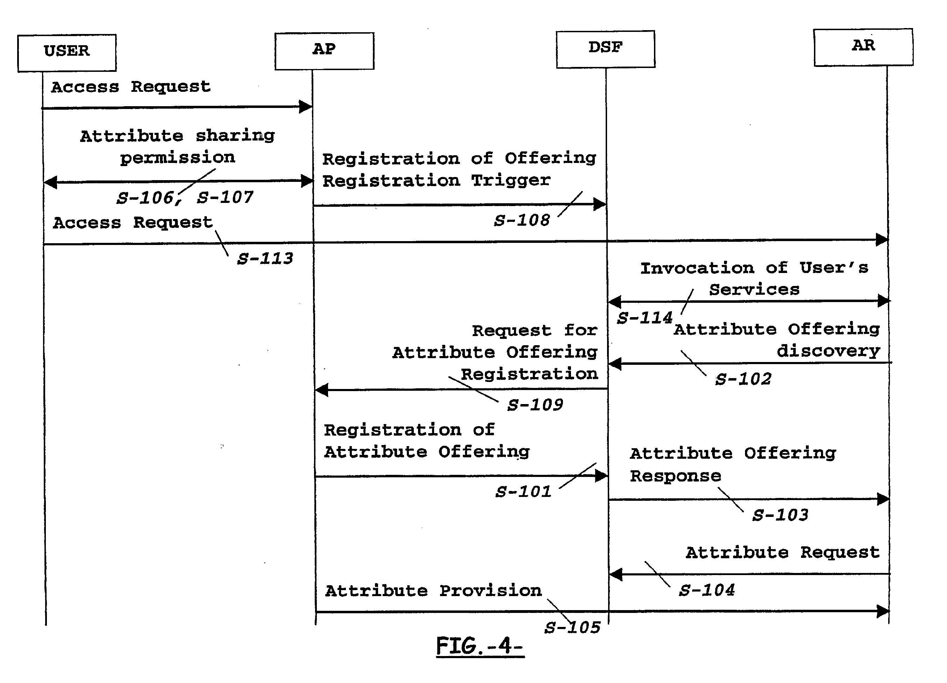

The process illustrated in Fig. 4 assumes that the user's attributes had been collected in a previous access and are already hosted in the Attribute Provider (20), and that the user (40) has given consent (S-106, S-107) for sharing user's attributes. Provided that such user's attributes had not been collected before, the collection can be carried out (S-112) in a similar manner as the one shown in Fig. 2. Therefore, as also shown in Fig. 3, the Attribute Provider may include a particular output unit (POU-4) for requesting (S-106) the user's attributes and likely the user's consent, and with a particular input unit (PIU-3) for getting (S-107) user's attributes and for being granted or denied such user's consent.

The process in Fig. 4 follows with the Attribute Provider (20) accessing the DSF (10) for registering an offering registration trigger (S-108) intended to further request a registration of an actual attribute offering upon request, if any, from another service provider (30) playing the role of an Attribute Requestor (AR). The DSF stores data extracted from this offering registration trigger in a trigger handler (TH), and makes it public and accessible for other service providers (30) wanting to share a corresponding user's attribute. To this end, as illustrated in Fig. 3, the Attribute Provider (20) is provided with a third output unit (POU-3) for accessing the DSF (10) to register the offering registration trigger (S-108), and the DSF is provided with a third input unit (FIU-3) to receive registrations of offering registration triggers (S-108) and with a trigger handler (TH) for handling triggers and determining trigger conditions to request a registration of an actual attribute offering. In particular, an offering registration trigger may be the same for all those users for which the Attribute Provider (20) hosts users' attributes, or may be different for each user having a user's attribute hosted in the Attribute Provider.

Moreover, the registration of the offering registration trigger (S-108) may be accompanied by a registration of policies intended to govern the lifetime of said offering registration trigger (S-108). Therefore, the third output unit (POU-3) may be preferably used.

In Fig. 4 and as already explained when commenting the process illustrated in Fig. 2, the user (40) might have accessed (S-113) another service provider (30) at a later stage and, after having been authenticated in this another service provider, the user may invoke a service (S-114) that needs a user's attribute hosted in an external Attribute Provider (20).

This another service provider (30) where the user has presently accessed, requests (S-102) as an Attribute Requestor (AR) the location of the user's attribute to the DSF (10), having to this end the first output unit (ROU-1) of the Attribute Requestor for issuing the query (S-102) and the second input unit (FIU-2) of the DSF for receiving the request (S-102).

Upon receipt of such request, the DSF fetches relevant information about an attribute offering for such user's attribute in its local storage (F-db), and does not find a proper attribute offering since, in this case, such attribute offering has not been registered yet from an Attribute Provider (20). The DSF, however, determines a trigger condition from the query received in the second input unit (FIU-2) matching with significant information of an offering registration trigger handled in the trigger handler (TH). This trigger condition makes the DSF request (S-109) a registration of the attribute offering to the Attribute Provider (20) hosting a corresponding user's attribute. Therefore, the DSF is provided in accordance with the invention and shown in Fig. 3 with a second output unit (FOU-2) for requesting (S-109) the registration of the attribute offering to the Attribute Provider (20), this second output unit (FOU-2) locally connected to the trigger handler (TH), and the trigger handler co-operating with the second input unit (FIU-2) for determining the trigger condition, whereas the Attribute Provider (20) includes a second input unit (PIU-2) for receiving and processing such request (S-109).

The reception of this request (S-109) in the Attribute Provider (20) is followed by a step of accessing the DSF to register the attribute offering (S-101) for such user's attribute to be offered. Therefore, as illustrated in Fig. 3, the Attribute Provider (20) includes its first output unit (POU-1) for accessing the DSF (10) to register the attribute offering (S-101), and the DSF is provided with its first input unit (FIU-1) to receive registrations of attribute offerings (S-101).

Furthermore, the registration of the attribute offering (S-101) may be accompanied by a registration of policies intended to govern the lifetime of said attribute offering (S-101). Therefore, the first output unit (POU-1) may be preferably used as well.

As receiving the requested registration of the attribute offering (S-101), the DSF stores data extracted from this attribute offering in the local storage (F-db), likely with accompanying policies, and makes it public and accessible for other service providers (30) wanting to share such user's attribute. Given that this registration had been triggered upon conditions derived from a request (S-102) received from an Attribute Requestor (30), the DSF fetches relevant information about the attribute offering and sends it back (S-103) to the Attribute Requestor (30). To this end, as Fig. 1 and Fig. 3 illustrate, the Attribute Requestor (30) is provided with its first output unit (ROU-1) for accessing the DSF (10) to query about the user's attribute and its first input unit (RIU-1) for receiving the expected response, whereas the DSF (10) is provided with its second input unit (FIU-2) for receiving such query (S-102) in connection with the trigger handler (TH) and the local storage (F-db), and it is also provided with its first output unit (FOU-1) for sending the response (S-103).

At this point, it is worthwhile to notice that the DSF may likely belong to the Identity Provider domain where the user belongs to, though the invention is not constrained to such particular scenario.

In an alternative embodiment, which is especially relevant for those attribute offerings corresponding to user's attributes that do not change very often, both offering registration trigger and actual attribute offering may be simultaneously registered, and likely including corresponding policies governing its respective lifetime. Therefore, different arrangements may be provided such as having a unique combination of first and third output units (POU-1, POU,3) at the Attribute Provider (20), and a unique corresponding combination of first and third input units (FIU-1, FIU-3) at the Discovery Service Framework (10). Indeed, separate units as in previous embodiments with a suitable co-ordination may be used as well to this end.

Eventually, withdrawal of offering registration triggers and actual attribute offerings may be respectively carried out at the DSF (10) either upon processing corresponding policies governing its respective lifetime, or upon request (S-110, S-111) from the Attribute Provider (20) once the user (40) signs off.

On the one hand, in accordance with an embodiment of the invention for withdrawal due to policies processing, the trigger handler (TH) at the DSF (10) may be used to withdraw an offering registration trigger as a result of processing corresponding policies, which are preferably handled at said trigger handler (TH), whereas the local storage (F-db) may be provided with processing capabilities to withdraw an attribute offering as a result of processing corresponding policies. In another alternative preferred embodiment, all policies applying to offering registration triggers and actual attribute offerings are handled by the trigger handler (TH) and, thereby, the withdrawal of any attribute offering might as well be carried out from the trigger handler (TH) by applying corresponding policies.

On the other hand, in accordance with an embodiment of the invention for withdrawal due to the user signing off, the trigger handler (TH) at the DSF (10) may also be used to withdraw an offering registration trigger as a result of receiving a request (S-110) from the Attribute Provider (20) once the user (40) has signed off. Therefore, the Attribute Provider (20) may include a fifth output unit (POU-5) for requesting withdrawal (S-110) of an offering registration trigger, and the DSF (10) may include a fourth input unit (FIU-4) for receiving such request (S-110) and for requesting the trigger handler (TH) to proceed accordingly. Moreover, the Attribute Provider (20) may also include a sixth output unit (POU-6) for requesting withdrawal (S-111) of an attribute offering, and the DSF (10) may include a fifth input unit (FIU-5) for receiving such request (S-111). Upon receiving (S-111) a request for withdrawal at the fifth input unit (FIU-5), the latter may request the trigger handler (TH) such withdrawal as well as corresponding policies for the attribute offering. However, the fifth input unit (FIU-5) might as well request the withdrawal to the local storage (F-db) where relevant data for the attribute offering are handled, and the latter, depending on whether policies for attribute offerings are stored in said local storage or in the trigger handler, may carry out such withdrawal locally or requesting the trigger handler to act correspondingly.

The invention is described in respect of several embodiments in an illustrative and non-restrictive manner. Modifications of the embodiments are possible in light of the above teachings, and those modifications that fall within the scope of the claims are intended to be included therein.

## Claims

1. A method of handling user's attributes sharing between a plurality of Service Providers (20, 30), a Service Provider being regarded as an Attribute Provider (20) hosting at least one user's attribute for a user (40) and offering such attribute for sharing with other Service Providers regarded as Attribute Requestors (30), an attribute offering being published in a Discovery Service Framework (10) suitable for holding attribute offerings from at least one Attribute Provider (20) and for providing any of such attribute offerings to at least one Attribute Requestor (30), the method comprising the steps of:
(a) the Attribute Provider registering (S-101) an attribute offering in the Discovery Service Framework;
(b) the Attribute Provider providing (S-105) the attribute upon request (S-104) from an Attribute Requestor;
the method **characterized in that** the above step a) is preceded in this method by previous steps of:
(c) the Attribute Provider (20) registering (S-108) an offering registration trigger in the Discovery Service Framework (10) intended to request, if needed, the registration of the attribute offering; and
(d) the Attribute Provider (20) receiving (S-109) from the Discovery Service Framework (10) a request for registration of the attribute offering.

2. The method of claim 1 wherein the offering registration trigger is the same for all those users for which the Attribute Provider hosts users' attributes (S-112).

3. The method of claim 1 wherein the offering registration trigger is different for each user having a user's attribute (S-112) hosted in the Attribute Provider.

4. The method of claim 1 wherein the step of registering (S-108) an offering registration trigger in the Discovery Service Framework also includes a step of registering policies intended to govern the lifetime of the offering registration trigger.

5. The method of claim 1 wherein the step of registering (S-101) an attribute offering in the Discovery Service Framework also includes a step of registering policies intended to govern the lifetime of the attribute offering.

6. The method of claim 1 further comprising a step of obtaining (S-106, S-107) a user's consent to share a user's attribute.

7. The method of claim 1 wherein the offering registration trigger is withdrawn (S-110) once the user signs off.

8. The method of claim 1 wherein just the attribute offering, and not the offering registration trigger, is withdrawn (S-111) once the user signs off.

9. A method of publishing through a Discovery Service Framework (10) an attribute offering for sharing a user's attribute between a plurality of Service Providers (20, 30), a Service Provider being regarded as an Attribute Provider (20) hosting the user's attribute for which the attribute offering may be published, the Discovery Service Framework (10) suitable for holding attribute offerings from at least one Attribute Provider (20), the method comprising the steps of:
(a) registering (S-101) in the Discovery Service Framework (10) an attribute offering upon request from an Attribute Provider (20);
(b) the Discovery Service Framework providing (S-103) the attribute offering upon request (S-102) from a Service Provider acting as an Attribute Requestor (30) for the attribute offering;
the method **characterized in that** the above step a) is preceded in this method by previous steps of:
(c) registering (S-108) an offering registration trigger in the Discovery Service Framework (10) upon request from the Attribute Provider (20);
(d) the Discovery Service Framework processing the offering registration trigger upon request for an attribute offering received from an Attribute Requestor; and
(e) requesting (S-109) the registration of the attribute offering to the Attribute Provider (20) as a result of processing the offering registration trigger.

10. The method of claim 9 wherein the step of registering (S-108) an offering registration trigger in the Discovery Service Framework also includes a step of registering policies intended to govern the lifetime of the offering registration trigger.

11. The method of claim 9 wherein the step of registering (S-101) an attribute offering in the Discovery Service Framework also includes a step of registering policies intended to govern the lifetime of the attribute offering.

12. The method of claim 9 wherein the offering registration trigger is withdrawn upon processing corresponding policies governing its lifetime.

13. The method of claim 9 wherein the offering registration trigger is withdrawn upon request (S-110) from the Attribute Provider (20) where the user signs off.

14. The method of claim 9 wherein just the attribute offering, and not the offering registration trigger, is withdrawn upon processing corresponding policies governing its lifetime.

15. The method of claim 9 wherein just the attribute offering, and not the offering registration trigger, is withdrawn upon request (S-111) from the Attribute Provider (20) where the user signs off.

16. A Discovery Service Framework (10) suitable for holding an attribute offering registered from an Attribute Provider (20) and for providing the attribute offering to an Attribute Requestor (30), the Attribute Provider and the Attribute Requestor being Service Providers (20, 30) enabled for sharing a user's attribute, the Attribute Provider hosting the user's attribute to be shared, the Discovery Service Framework (10) including:
(a) a first input unit (FIU-1) for processing an attribute offering received from an Attribute Provider (20);
(b) a storage (F-db) for storing contents obtainable from the attribute offering;
(c) a second input unit (FIU-2) for processing a request received from an Attribute Requestor (30) for the attribute offering; and
(d) a first output unit (FOU-1) for providing the attribute offering to the Attribute Requestor (30);
and **characterized in that** further comprises:
(e) a third input unit (FIU-3) for processing an offering registration trigger received from the Attribute Provider (20);
(f) a trigger handler (TH) for storing contents obtainable from the offering registration trigger and for determining trigger conditions to request a registration of the attribute offering; and
(g) a second output unit (FOU-2) for requesting the registration of the attribute offering to the Attribute Provider (20).

17. The Discovery Service Framework of claim 16 wherein the trigger handler (TH) determines the trigger conditions upon reception in the second input unit (FIU-2) of the request (S-102) for the attribute offering from the Attribute Requestor (30).

18. The Discovery Service Framework of claim 16 wherein the trigger handler (TH) is usable for processing policies received in the third input unit (FIU-3) and intended to govern the lifetime of the offering registration trigger.

19. The Discovery Service Framework of claim 18 wherein the trigger handler (TH) is usable to withdraw an offering registration trigger upon processing corresponding policies governing its lifetime.

20. The Discovery Service Framework of claim 16 wherein the trigger handler (TH) is usable to withdraw an offering registration trigger upon request (S-110) received in a fourth input unit (FIU-4) from the Attribute Provider (20) where the user signs off.

21. The Discovery Service Framework of claim 16 wherein the trigger handler (TH) is usable for processing policies received in the first input unit (FIU-1) and intended to govern the lifetime of the attribute offering.

22. The Discovery Service Framework of claim 21 wherein the trigger handler (TH) is usable to withdraw an attribute offering upon processing corresponding policies governing its lifetime.

23. The Discovery Service Framework of claim 16 wherein the trigger handler (TH) is usable to withdraw an attribute offering upon request (S-111) received in a fifth input unit (FIU-5) from the Attribute Provider (20) where the user signs off.

24. An Attribute Provider (20) hosting a user's attribute for a user (40) and offering such attribute for sharing with other Service Providers regarded as Attribute Requestors (30), an attribute offering for the user's attribute being published in a Discovery Service Framework (10) suitable for holding attribute offerings from Attribute Providers (20) and for providing any of such attribute offerings to Attribute Requestors (30), the Attribute Provider (20) comprising:
(a) a first output unit (POU-1) for accessing the Discovery Service Framework (10) to register an attribute offering;
(b) a first input unit (PIU-1) for processing a request received (S-104) from an Attribute Requestor (30) for the attribute offering; and
(c) a second output unit (POU-2) for providing the attribute offering to the Attribute Requestor (30);
and **characterized in that** further comprises:
(d) a third output unit (POU-3) for accessing (S-108) the Discovery Service Framework (10) to register an offering registration trigger; and
(e) a second input unit (PIU-2) for processing a request received (S-109) from the Discovery Service Framework (10) for registration of an attribute offering.

25. The Attribute Provider of claim 24 wherein the third output unit (POU-3) is used for accessing the Discovery Service Framework (10) to register policies intended to govern the lifetime of the offering registration trigger.

26. The Attribute Provider of claim 24 wherein the first output unit (POU-1) is used for accessing the Discovery Service Framework (10) to register policies intended to govern the lifetime of the attribute offering.

27. The Attribute Provider of claim 24 further comprising:
(f) a fourth output unit (POU-4) for requesting (S-106) a user's consent to share a user's attribute; and
(g) a third input unit (PIU-3) for obtaining (S-107) the user's consent to share a user's attribute.

28. The Attribute Provider of claim 24 further comprising a fifth output unit (POU-5) for accessing the Discovery Service Framework (10) to withdraw (S-110) an offering registration trigger upon the user (40) signing off.

29. The Attribute Provider of claim 24 further comprising a sixth output unit (POU-6) for accessing the Discovery Service Framework (10) to withdraw (S-111) an attribute offering upon the user (40) signing off.

30. The Attribute Provider of claim 24 wherein the third output unit (POU-3) is used to register in the Discovery Service Framework (10) a same offering registration trigger for all those users for which the Attribute Provider hosts users' attributes.

31. The Attribute Provider of claim 24 wherein the third output unit (POU-3) is used to register in the Discovery Service Framework (10) a different offering registration trigger for each user having a user's attribute hosted in the Attribute Provider.

32. The Attribute Provider of claim 24 wherein the third and first output units are used to register the offering registration trigger along with an actual attribute offering.

## Patentansprüche

1. Verfahren zur Handhabung der gemeinsamen Nutzung von Benutzerattributen zwischen einer Vielzahl von Dienstanbietem (20, 30), wobei ein Dienstanbieter als Attributanbieter (20) gilt, der mindestens ein Benutzerattribut für einen Benutzer (40) in einem Host bereithält und ein solches Attribut zur Mitnutzung durch andere Dienstanbieter, die als Attributanforderer (30) gelten, anbietet, wobei ein Attributangebot in einem Discovery-Dienstrahmengefüge (10) veröffentlicht wird, das zum Halten von Attributangeboten von mindestens einem Attributanbieter (20) und zum Bereitstellen irgendeines dieser Attributangebote für mindestens einen Attributanforderer (30) geeignet ist, wobei das Verfahren die folgenden Schritte umfasst:
(a) Registrieren (S-101) eines Attributangebots im Discovery-Dienstrahmengefüge durch den Attributanbieter;
(b) Bereitstellen (S-105) des Attributs durch den Attributanbieter auf Ersuchen (S-104) von einem Attributanforderer;
wobei das Verfahren **dadurch gekennzeichnet ist, dass** dem obigen Schritt a) in diesem Verfahren folgende vorhergehende Schritte vorausgehen:
(c) durch den Attributanbieter (20) erfolgendes Registrieren (S-108) eines Angebotsregistrierungsauslösers im Discovery-Dienstrahmengefüge (10), der dafür vorgesehen ist, bei Bedarf um die Registrierung des Attributangebots zu ersuchen; und
(d) durch den Attributanbieter (20) erfolgendes Empfangen (S-109) eines Ersuchens um Registrierung des Attributangebots vom Discovery-Dienstrahmengefüge (10).

2. Verfahren nach Anspruch 1, wobei der Angebotsregistrierungsauslöser für alle diejenigen Benutzer, für die der Attributanbieter Attribute von Benutzern (S-112) in einem Host bereithält, der gleiche ist.

3. Verfahren nach Anspruch 1, wobei der Angebotsregistrierungsauslöser für jeden Benutzer, von dem ein Benutzerattribut (S-112) im Attributanbieter bereitgehalten wird, ein anderer ist.

4. Verfahren nach Anspruch 1, wobei der Schritt des Registrierens (S-108) eines Angebotsregistrierungsauslösers im Discovery-Dienstrahmengefüge außerdem folgenden Schritt aufweist: Registrieren von Richtlinien, die dafür vorgesehen sind, die Lebensdauer des Angebotsregistrierungsauslösers zu regulieren.

5. Verfahren nach Anspruch 1, wobei der Schritt des Registrierens (S-101) eines Attributangebots im Discovery-Dienstrahmengefüge außerdem folgenden Schritt aufweist: Registrieren von Richtlinien, die dafür vorgesehen sind, die Lebensdauer des Attributangebots zu regulieren.

6. Verfahren nach Anspruch 1, ferner umfassend folgenden Schritt: Erlangen (S-106, S-107) der Einwilligung eines Benutzers zur Mitnutzung eines Benutzerattributs.

7. Verfahren nach Anspruch 1, wobei der Angebotsregistrierungsauslöser zurückgenommen wird (S-110), wenn sich der Benutzer abmeldet.

8. Verfahren nach Anspruch 1, wobei nur das Attributangebot und nicht der Angebotsregistrierungsauslöser zurückgenommen wird (S-111), wenn sich der Benutzer abmeldet.

9. Verfahren zur Veröffentlichung eines Attributangebots zur gemeinsamen Nutzung von Benutzerattributen zwischen einer Vielzahl von Dienstanbietem (20, 30) durch ein Discovery-Dienstrahmengefüge (10), wobei ein Dienstanbieter als Attributanbieter (20) gilt, der das Benutzerattribut, für das das Attributangebot veröffentlicht werden kann, in einem Host bereithält, wobei das Discovery-Dienstrahmengefüge (10) zum Halten von Attributangeboten von mindestens einem Attributanbieter (20) geeignet ist, wobei das Verfahren die folgenden Schritte umfasst:
(a) Registrieren (S-101) eines Attributangebots (10) im Discovery-Dienstrahmengefüge auf Ersuchen von einem Attributanbieter (20);
(b) Bereitstellen (S-103) des Attributangebots durch das Discovery-Dienstrahmengefüge auf Ersuchen (S-102) um das Attributangebot von einem Dienstanbieter, der als Attributanforderer (30) fungiert;
wobei das Verfahren **dadurch gekennzeichnet ist, dass** dem obigen Schritt a) in diesem Verfahren folgende vorhergehende Schritte vorausgehen:
(c) Registrieren (S-108) eines Angebotsregistrierungsauslösers im Discovery-Dienstrahmengefüge (10) auf Ersuchen vom Attributanbieter (20);
(d) Verarbeiten des Angebotsregistrierungsauslösers durch das Discovery-Dienstrahmengefüge auf Ersuchen um ein Attributangebot, das von einem Attributanforderer empfangen wird; und
(e) Ersuchen (S-109) um die Registrierung des Attributangebots im Attributanbieter (20) als Ergebnis der Verarbeitung des Angebotsregistrierungsauslösers.

10. Verfahren nach Anspruch 9, wobei der Schritt des Registrierens (S-108) eines Angebotsregistrierungsauslösers im Discovery-Dienstrahmengefüge außerdem folgenden Schritt aufweist: Registrieren von Richtlinien, die dafür vorgesehen sind, die Lebensdauer des Angebotsregistrierungsauslösers zu regulieren.

11. Verfahren nach Anspruch 9, wobei der Schritt des Registrierens (S-101) eines Attributangebots im Discovery-Dienstrahmengefüge außerdem folgenden Schritt aufweist: Registrieren von Richtlinien, die dafür vorgesehen sind, die Lebensdauer des Attributangebots zu regulieren.

12. Verfahren nach Anspruch 9, wobei der Angebotsregistrierungsauslöser nach Verarbeitung entsprechender Richtlinien, die dessen Lebensdauer regulieren, zurückgenommen wird.

13. Verfahren nach Anspruch 9, wobei der Angebotsregistrierungsauslöser auf Ersuchen (S-110) zurückgenommen wird von dem Attributanbieter (20), wo sich der Benutzer abmeldet.

14. Verfahren nach Anspruch 9, wobei nur das Attributangebot und nicht der Angebotsregistrierungsauslöser nach Verarbeitung entsprechender Richtlinien, die dessen Lebensdauer regulieren, zurückgenommen wird.

15. Verfahren nach Anspruch 9, wobei nur das Attributangebot und nicht der Angebotsregistrierungsauslöser auf Ersuchen (S-111) zurückgenommen wird von dem Attributanbieter (20), wo sich der Benutzer abmeldet.

16. Discovery-Dienstrahmengefüge (10), das zum Halten eines registrierten Attributsangebots von einem Attributanbieter (20) und zum Bereitstellen des Attributangebots für einen Attributanforderer (30) geeignet ist, wobei der Attributanbieter und der Attributanforderer Dienstanbieter (20, 30) sind, die zur Mitnutzung eines Benutzerattributs ermächtigt sind, wobei der Attributanbieter das gemeinsam zu nutzende Benutzerattribut in einem Host bereithält, wobei das Discovery-Dienstrahmengefüge (10) aufweist:
(a) eine erste Eingabeeinheit (FIU-1) zur Verarbeitung eines von einem Attributanbieter (20) empfangenen Attributangebots;
(b) einen Speicher (F-db) zum Speichern von Inhalt, der aus dem Attributangebot gewonnen werden kann;
(c) eine zweite Eingabeeinheit (FIU-2) zur Verarbeitung eines von einem Attributanforderer (30) empfangenen Ersuchens um das Attributangebot; und
(d) eine erste Ausgabeeinheit (FOU-1) zum Bereitstellen des Attributangebots für den Attributanforderer (30),
und **dadurch gekennzeichnet, dass** es ferner umfasst:
(e) eine dritte Eingabeeinheit (FIU-3) zur Verarbeitung eines vom Attributanbieter (20) empfangenen Angebotsregistrierungsauslösers;
(f) einen Auslöser-Handler (TH) zum Speichern von Inhalt, der aus dem Angebotsregistrierungsauslöser gewonnen werden kann, und zum Bestimmen von Auslöserbedingungen, um eine Registrierung des Attributangebots zu ersuchen; und
(g) eine zweite Ausgabeeinheit (FOU-2) zum Ersuchen um die Registrierung des Attributangebots im Attributanbieter (20).

17. Discovery-Dienstrahmengefüge nach Anspruch 16, wobei der Auslöser-Handler (TH) die Auslöserbedingungen nach dem in der zweiten Eingabeeinheit (FIU-2) erfolgenden Empfang des Ersuchens (S-102) um das Attributangebot vom Attributanforderer (30) bestimmt.

18. Discovery-Dienstrahmengefüge nach Anspruch 16, wobei der Auslöser-Handler (TH) zur Verarbeitung von Richtlinien verwendbar ist, die in der dritten Eingabeeinheit (FIU-3) empfangenen werden und dafür vorgesehen sind, die Lebensdauer des Angebotregistrierungsauslösers zu regulieren.

19. Discovery-Dienstrahmengefüge nach Anspruch 18, wobei der Auslöser-Handler (TH) verwendbar ist, um einen Angebotsregistrierungsauslöser nach Verarbeitung entsprechender Richtlinien, die dessen Lebensdauer regulieren, zurückzunehmen.

20. Discovery-Dienstrahmengefüge nach Anspruch 16, wobei der Auslöser-Handler (TH) verwendbar ist, um einen Angebotsregistrierungsauslöser auf ein in einer vierten Eingabeeinheit (FIU-4) empfangenes Ersuchen (S-110) zurückzunehmen von dem Attributanbieter (20), wo sich der Benutzer abmeldet.

21. Discovery-Dienstrahmengefüge nach Anspruch 16, wobei der Auslöser-Handler (TH) zur Verarbeitung von Richtlinien verwendbar ist, die in der ersten Eingabeeinheit (FIU-1) empfangen werden und dafür vorgesehen sind, die Lebensdauer des Attributangebots zu regulieren.

22. Discovery-Dienstrahmengefüge nach Anspruch 21, wobei der Auslöser-Handler (TH) verwendbar ist, um ein Attributangebot nach Verarbeitung entsprechender Richtlinien, die dessen Lebensdauer regulieren, zurückzunehmen.

23. Discovery-Dienstrahmengefüge nach Anspruch 16, wobei der Auslöser-Handler (TH) verwendbar ist, um ein Attributangebot auf ein in einer fünften Eingabeeinheit (FIU-5) empfangenes Ersuchen (S-111) zurückzunehmen von dem Attributanbieter (20), wo sich der Benutzer abmeldet.

24. Attributanbieter (20), der ein Benutzerattribut für einen Benutzer (40) in einem Host bereithält und ein solches Attribut zur Mitnutzung durch andere Dienstanbieter, die als Attributanforderer (30) gelten, anbietet, wobei ein Attributangebot für das Benutzerattribut in einem Discovery-Dienstrahmengefüge (10) veröffentlicht wird, das zum Halten von Attributangeboten von Attributanbietern (20) und zum Bereitstellen irgendeines dieser Attributangebote für Attributanforderer (30) geeignet ist, wobei der Attributanbieter (20) umfasst:
(a) eine erste Ausgabeeinheit (POU-1) für den Zugriff auf das Discovery-Dienstrahmengefüge (10), um ein Attributangebot zu registrieren,
(b) eine erste Eingabeeinheit (PIU-1) zur Verarbeitung eines von einem Attributanforderer (30) empfangenen Ersuchens um das Attributangebot (S-104); und
(c) eine zweite Ausgabeeinheit (POU-2) zum Bereitstellen des Attributangebots für den Attributanforderer (30);
und **dadurch gekennzeichnet, dass** er ferner umfasst:
(d) eine dritte Ausgabeeinheit (POU-3) für den Zugriff (S-108) auf das Discovery-Dienstrahmengefüge (10), um einen Angebotsregistrierungsauslöser zu registrieren; und
(e) eine zweite Eingabeeinheit (PIU-2) zur Verarbeitung eines vom Discovery-Dienstrahmengefüge (10) empfangenen Ersuchens (S-109) um Registrierung eines Attributangebots.

25. Attributanbieter nach Anspruch 24, wobei die dritte Ausgabeeinheit (POU-3) für den Zugriff auf das Discovery-Dienstrahmengefüge (10) verwendet wird, um Richtlinien zu registrieren, die dafür vorgesehen sind, die Lebensdauer des Angebotsregistrierungsauslösers zu regulieren.

26. Attributanbieter nach Anspruch 24, wobei die erste Ausgabeeinheit (POU-1) für den Zugriff auf das Discovery-Dienstrahmengefüge (10) verwendet wird, um Richtlinien zu registrieren, die dafür vorgesehen sind, die Lebensdauer des Attributangebots zu regulieren.

27. Attributanbieter nach Anspruch 24, ferner umfassend:
(f) eine vierte Ausgabeeinheit (POU-4) zum Ersuchen (S 106) um die Einwilligung eines Benutzers zur Mitnutzung eines Benutzerattributs; und
(g) eine dritte Eingabeeinheit (PIU-3) zur Erlangung (S-107) der Einwilligung des Benutzers zur Mitnutzung eines Benutzerattributs.

28. Attributanbieter nach Anspruch 24, ferner umfassend eine fünfte Ausgabeeinheit (POU-5) für den Zugriff auf das Discovery-Dienstrahmengefüge (10), um nach Abmeldung des Benutzers (40) einen Angebotsregistrierungsauslöser zurückzunehmen (S-110).

29. Attributanbieter nach Anspruch 24, ferner umfassend eine sechste Ausgabeeinheit (POU-6) für den Zugriff auf das Discovery-Dienstrahmengefüge (10), um nach Abmeldung des Benutzers (40) ein Attributangebot zurückzunehmen (S-111).

30. Attributanbieter nach Anspruch 24, wobei die dritte Ausgabeeinheit (POU-3) verwendet wird, um im Discovery-Dienstrahmengefüge (10) einen gleichen Angebotsregistrierungsauslöser für alle diejenigen Anwender zu registrieren, für die der Attributanbieter Attribute von Benutzern in einem Host bereithält.

31. Attributanbieter nach Anspruch 24, wobei die dritte Ausgabeeinheit (POU-3) verwendet wird, um im Discovery-Dienstrahmengefüge (10) einen anderen Angebotsregistrierungsauslöser für jeden Benutzer, von dem ein Benutzerattribut im Attributanbieter bereitgehalten wird, zu registrieren.

32. Attributanbieter nach Anspruch 24, wobei die dritte und erste Ausgabeeinheit verwendet werden, um Angebotsregistrierungsauslöser zusammen mit einem tatsächlichen Attributangebot zu registrieren.

## Revendications

1. Procédé de traitement d'un partage d'attributs d'utilisateur entre une pluralité de fournisseurs de service (20, 30), un fournisseur de service étant considéré comme un fournisseur d'attributs (20) hébergeant au moins un attribut d'utilisateur pour un utilisateur (40) et offrant un tel attribut à partager avec d'autres fournisseurs de service considérés comme des demandeurs d'attributs (30), une offre d'attributs étant publiée dans une infrastructure de services de découverte (10) apte à conserver des offres d'attributs en provenance d'au moins un fournisseur d'attributs (20) et à fournir l'une quelconque de telles offres d'attributs à au moins un demandeur d'attributs (30), le procédé comprenant les étapes ci-dessous dans lesquelles :
(a) le fournisseur d'attributs enregistre (S-101) une offre d'attributs dans l'infrastructure de services de découverte ;
(b) le fournisseur d'attributs fournit (S-105) l'attribut suite à une demande (S-104) en provenance d'un demandeur d'attributs ;
le procédé étant **caractérisé en ce que** l'étape a) ci-dessus est précédée, dans ce procédé, par les étapes précédentes ci-dessous dans lesquelles :
(c) le fournisseur d'attributs (20) enregistre (S-108) un déclencheur d'enregistrement d'offre, dans l'infrastructure de services de découverte (10), destiné à demander, si nécessaire, l'enregistrement de l'offre d'attributs ; et
(d) le fournisseur d'attributs (20) reçoit (S-109), en provenance de l'infrastructure de services de découverte (10), une demande d'enregistrement de l'offre d'attributs.

2. Procédé selon la revendication 1, dans lequel le déclencheur d'enregistrement d'offre est le même pour tous les utilisateurs pour lesquels le fournisseur d'attributs héberge des attributs d'utilisateurs (S-112).

3. Procédé selon la revendication 1, dans lequel le déclencheur d'enregistrement d'offre est différent pour chaque utilisateur ayant un attribut d'utilisateur (S-112) hébergé au niveau du fournisseur d'attributs.

4. Procédé selon la revendication 1, dans lequel l'étape d'enregistrement (S-108) d'un déclencheur d'enregistrement d'offre dans l'infrastructure de services de découverte inclut en outre une étape consistant à enregistrer des règles destinées à régir la durée de vie du déclencheur d'enregistrement d' offre.

5. Procédé selon la revendication 1, dans lequel l'étape d'enregistrement (S-101) d'une offre d'attributs dans l'infrastructure de services de découverte inclut en outre une étape consistant à enregistrer des règles destinées à régir la durée de vie de l'offre d'attributs.

6. Procédé selon la revendication 1, comprenant en outre une étape consistant à obtenir (S-106, S-107) un consentement d'un utilisateur en ce qui concerne le partage d'un attribut d'utilisateur.

7. Procédé selon la revendication 1, dans lequel le déclencheur d'enregistrement d'offre est supprimé (S-110) dès lors que l'utilisateur se déconnecte.

8. Procédé selon la revendication 1, dans lequel seule l'offre d'attributs, et non le déclencheur d'enregistrement d'offre, est supprimée (S-111) dès lors que l'utilisateur se déconnecte.

9. Procédé de publication, par le biais d'une infrastructure de services de découverte (10), d'une offre d'attributs, en vue de partager un attribut d'utilisateur entre une pluralité de fournisseurs de service (20, 30), un fournisseur de service étant considéré comme un fournisseur d'attributs (20) hébergeant l'attribut de l'utilisateur pour lequel l'offre d'attributs peut être publiée, l'infrastructure de services de découverte (10) étant apte à conserver des offres d'attributs en provenance d'au moins un fournisseur d'attributs (20), le procédé comprenant les étapes ci-dessous consistant à :
(a) enregistrer (S-101), dans l'infrastructure de services de découverte (10), une offre d'attributs, suite à une demande en provenance d'un fournisseur d'attributs (20) ;
(b) l'infrastructure de services de découverte fournissant (S-103) l'offre d'attributs suite à une demande (S-102) en provenance d'un fournisseur de service agissant en qualité de demandeur d'attributs (30) pour l'offre d'attributs ;
le procédé étant **caractérisé en ce que** l'étape a) ci-dessus est précédée, dans ce procédé, par les étapes précédentes ci-dessous consistant à :
(c) enregistrer (S-108) un déclencheur d'enregistrement d'offre dans l'infrastructure de services de découverte (10) suite à une demande en provenance du fournisseur d'attributs (20) ;
(d) l'infrastructure de services de découverte traitant le déclencheur d'enregistrement d'offre suite à une demande d'une offre d'attributs reçue en provenance d'un demandeur d'attributs ; et
(e) demander (S-109) l'enregistrement de l'offre d'attributs, au fournisseur d'attributs (20), suite au traitement du déclencheur d'enregistrement d'offre.

10. Procédé selon la revendication 9, dans lequel l'étape d'enregistrement (S-108) d'un déclencheur d'enregistrement d'offre dans l'infrastructure de services de découverte inclut en outre une étape consistant à enregistrer des règles destinées à régir la durée de vie du déclencheur d'enregistrement d' offre.

11. Procédé selon la revendication 9, dans lequel l'étape d'enregistrement (S-101) d'une offre d'attributs dans l'infrastructure de services de découverte inclut en outre une étape consistant à enregistrer des règles destinées à régir la durée de vie de l'offre d'attributs.

12. Procédé selon la revendication 9, dans lequel le déclencheur d'enregistrement d'offre est supprimé suite au traitement de règles correspondantes régissant sa durée de vie.

13. Procédé selon la revendication 9, dans lequel le déclencheur d'enregistrement d'offre est supprimé suite à une demande (S-110) en provenance du fournisseur d'attributs (20) où l'utilisateur se déconnecte.

14. Procédé selon la revendication 9, dans lequel seule l'offre d'attributs, et non le déclencheur d'enregistrement d'offre, est supprimée, suite au traitement de règles correspondantes régissant sa durée de vie.

15. Procédé selon la revendication 9, dans lequel seule l'offre d'attributs, et non le déclencheur d'enregistrement d'offre, est supprimée suite à une demande (S-111) en provenance du fournisseur d'attributs (20) où l'utilisateur se déconnecte.

16. Infrastructure de services de découverte (10) apte à conserver une offre d'attributs enregistrée à partir d'un fournisseur d'attributs (20) et à fournir l'offre d'attributs à un demandeur d'attributs (30), le fournisseur d'attributs et le demandeur d'attributs étant des fournisseurs de service (20, 30) autorisés à partager un attribut d'utilisateur, le fournisseur d'attributs hébergeant l'attribut d'utilisateur à partager, l'infrastructure de services de découverte (10) incluant :
(a) une première unité d'entrée (FIU-1) destinée à traiter une offre d'attributs reçue en provenance d'un fournisseur d'attributs (20) ;
(b) un magasin de stockage (F-db) destiné à stocker les contenus accessibles à partir de l'offre d'attributs ;
(c) une deuxième unité d'entrée (FIU-2) destinée à traiter une demande reçue en provenance d'un demandeur d'attributs (30) pour l'offre d'attributs ; et
(d) une première unité de sortie (FOU-1) destinée à fournir l'offre d'attributs au demandeur d'attributs (30) ; et
**caractérisée en ce qu'**il comporte en outre :
(e) une troisième unité d'entrée (FIU-3) destinée à traiter un déclencheur d'enregistrement d'offre reçu en provenance du fournisseur d'attributs (20) ;
(f) un gestionnaire de déclenchement (TH) destiné à stocker des contenus accessibles à partir du déclencheur d'enregistrement d'offre et à déterminer des conditions de déclenchement permettant de demander un enregistrement de l'offre d'attributs ; et
(g) une deuxième unité de sortie (FOU-2) destinée à demander l'enregistrement de l'offre d'attributs au fournisseur d'attributs (20).

17. Infrastructure de services de découverte selon la revendication 16, dans laquelle le gestionnaire de déclenchement (TH) détermine les conditions de déclenchement, suite à la réception, au sein de la deuxième unité d'entrée (FIU-2), de la demande (S-102) concernant l'offre d'attributs en provenance du demandeur d'attributs (30).

18. Infrastructure de services de découverte selon la revendication 16, dans laquelle le gestionnaire de déclenchement (TH) est utilisable en vue de traiter des règles reçues au sein de la troisième unité d'entrée (FIU-3), et destinées à régir la durée de vie du déclencheur d'enregistrement d' offre.

19. Infrastructure de services de découverte selon la revendication 18, dans laquelle le gestionnaire de déclenchement (TH) est utilisable en vue de supprimer un déclencheur d'enregistrement d'offre suite au traitement de règles correspondantes régissant sa durée de vie.

20. Infrastructure de services de découverte selon la revendication 16, dans laquelle le gestionnaire de déclenchement (TH) est utilisable en vue de supprimer un déclencheur d'enregistrement d'offre, suite à une demande (S-110), reçue au sein d'une quatrième unité d'entrée (FIU-4), en provenance du fournisseur d'attributs (20) où l'utilisateur se déconnecte.

21. Infrastructure de services de découverte selon la revendication 16, dans laquelle le gestionnaire de déclenchement (TH) est utilisable en vue de traiter des règles reçues au sein de la première unité d'entrée (FIU-1), et destinées à régir la durée de vie de l'offre d'attributs.

22. Infrastructure de services de découverte selon la revendication 21, dans laquelle le gestionnaire de déclenchement (TH) est utilisable de manière à supprimer une offre d'attributs suite au traitement de règles correspondantes régissant sa durée de vie.

23. Infrastructure de services de découverte selon la revendication 16, dans laquelle le gestionnaire de déclenchement (TH) est utilisable en vue de supprimer une offre d'attributs, suite à une demande (S-111), reçue au sein d'une cinquième unité d'entrée (FIU-5), en provenance du fournisseur d'attributs (20) où l'utilisateur se déconnecte.

24. Fournisseur d'attributs (20) hébergeant un attribut d'utilisateur pour un utilisateur (40), et offrant ledit attribut à partager avec d'autres fournisseurs de service considérés comme des demandeurs d'attributs (30), une offre d'attributs pour l'attribut d'utilisateur étant publiée au sein d'une infrastructure de services de découverte (10) apte à conserver des offres d'attributs en provenance de fournisseurs d'attributs (20), et à fournir l'une quelconque de ces offres d'attributs à des demandeurs d'attributs (30), le fournisseur d'attributs (20), comprenant :
(a) une première unité de sortie (POU-1) destinée à accéder à l'infrastructure de services de découverte (10) en vue d'enregistrer une offre d'attributs ;
(b) une première unité d'entrée (PIU-1) destinée à traiter une demande reçue (S-104) en provenance d'un demandeur d'attributs (30) concernant l'offre d'attributs ; et
(c) une deuxième unité de sortie (POU-2) destinée à fournir l'offre d'attributs au demandeur d'attributs (30) ; et
**caractérisé en ce qu'**il comporte en outre :
(d) une troisième unité de sortie (POU-3) destinée à accéder (S-108) à l'infrastructure de services de découverte (10) en vue d'enregistrer un déclencheur d'enregistrement d'offre ; et
(e) une deuxième unité d'entrée (PIU-2) destinée à traiter une demande reçue (S-109) à partir de l'infrastructure de services de découverte (10), en vue de l'enregistrement d'une offre d'attributs.

25. Fournisseur d'attributs selon la revendication 24, dans lequel la troisième unité de sortie (POU-3) est utilisée en vue d'accéder à l'infrastructure de services de découverte (10) afin d'enregistrer des règles destinées à régir la durée de vie du déclencheur d'enregistrement d'offre.

26. Fournisseur d'attributs selon la revendication 24, dans lequel la première unité de sortie (POU-1) est utilisée en vue d'accéder à l'infrastructure de services de découverte (10) afin d'enregistrer des règles destinées à régir la durée de vie de l'offre d'attributs.

27. Fournisseur d'attributs selon la revendication 24, comportant en outre :
(f) une quatrième unité de sortie (POU-4) destinée à demander (S-106) le consentement d'un utilisateur concernant le partage d'un attribut d'utilisateur ; et
(g) une troisième unité d'entrée (PIU-3) destinée à obtenir (S-107) le consentement d'un utilisateur à partager un attribut d'utilisateur.

28. Fournisseur d'attributs selon la revendication 24, comprenant en outre une cinquième unité de sortie (POU-5) destinée à accéder à l'infrastructure de services de découverte (10) en vue de supprimer (S-110) un déclencheur d'enregistrement d'offre suite à la déconnexion de l'utilisateur (40).

29. Fournisseur d'attributs selon la revendication 24, comprenant en outre une sixième unité de sortie (POU-6) destinée à accéder à l'infrastructure de services de découverte (10) en vue de supprimer (S-111) une offre d'attributs suite à la déconnexion de l'utilisateur (40).

30. Fournisseur d'attributs selon la revendication 24, dans lequel la troisième unité de sortie (POU-3) est utilisée en vue d'enregistrer, au sein de l'infrastructure de services de découverte (10), un même déclencheur d'enregistrement d'offre pour tous les utilisateurs pour lesquels le fournisseur d'attributs héberge des attributs d'utilisateurs.

31. Fournisseur d'attributs selon la revendication 24, dans lequel la troisième unité de sortie (POU-3) est utilisée en vue d'enregistrer, au sein de l'infrastructure de services de découverte (10), un déclencheur d'enregistrement d'offre différent pour chaque utilisateur dont un attribut d'utilisateur est hébergé au niveau du fournisseur d'attributs.

32. Fournisseur d'attributs selon la revendication 24, dans lequel les troisième et première unités de sortie sont utilisées en vue d'enregistrer le déclencheur d'enregistrement d'offre avec une offre d'attributs effective.
